# EUROPÄISCHE PATENTSCHRIFT

(11) **EP 3 074 161 B1**
(45) Veröffentlichungstag und Bekanntmachung des Hinweises auf die Patenterteilung: **29.11.2023**
(21) Anmeldenummer: 14734410.5
(22) Anmeldetag: 06.06.2014
(51) Int. Cl.: B22F 10/28, B33Y 10/00, B22F 5/00, B33Y 30/00, B22F 12/47, B23P 6/00, B22F 5/04, B22F 12/10, B33Y 80/00

(54) **VERFAHREN UND VORRICHTUNG ZUM GENERATIVEN HERSTELLEN ZUMINDEST EINES BAUTEILBEREICHS EINES BAUTEILS**
METHOD AND DEVICE FOR ADDITIVELY MANUFACTURING AT LEAST ONE COMPONENT REGION OF A COMPONENT
PROCÉDÉ ET DISPOSITIF DE FABRICATION GÉNÉRATIVE D'AU MOINS ZONE D'UN ÉLÉMENT STRUCTUREL

(30) Priorität: 27.11.2013 DE 102013224319
(43) Veröffentlichungstag der Anmeldung: 05.10.2016
(73) Patentinhaber: EOS GmbH Electro Optical Systems, 82152 Krailling (DE)
(72) Erfinder: JAKIMOV, Andreas, 81245 München (DE); SCHLICK, Georg, 80995 München (DE); HANRIEDER, Herbert, 85411 Hohenkammer (DE); LEUTERER, Martin, 82140 Olching (DE)
(74) Vertreter: Hofstetter, Schurack & Partner
(86) Internationale Anmeldenummer: PCT/EP2014/061877
(87) Internationale Veröffentlichungsnummer: WO 2015/078595

(56) Entgegenhaltungen:
- EP-A1- 2 772 329
- WO-A2-2013/041195
- DE-A1-102007 014 683
- US-A1- 2005 242 473

## Beschreibung

Die Erfindung betrifft ein Verfahren und eine Vorrichtung zum generativen Herstellen zumindest eines Bauteilbereichs eines Bauteils, insbesondere eines Bauteils einer Turbine oder eines Verdichters.

Aus dem Stand der Technik sind generative Herstellungsverfahren zur schnellen Herstellung von Prototypen oder zur Herstellung von Bauteilen, die mit anderen Verfahren schwierig herzustellen sind, bekannt. Unter anderem werden hierfür Verfahren wie das selektive Laserschmelzen (SLM Selective Laser Melting), das direkte Metalllasersintern (DMLS Direct Metal Laser Sintering) oder Elektronenstrahlenverfahren eingesetzt. Aus dem Stand der Technik sind insbesondere auch generative Herstellverfahren für die Herstellung von Bauteilen einer Strömungsmaschine, wie beispielsweise von Bauteilen eines Flugtriebwerks oder einer Gasturbine bekannt, z. B. das in der DE 10 2009 051 479 A1 beschriebene Verfahren bzw. eine entsprechende Vorrichtung zur Herstellung eines Bauteils einer Strömungsmaschine. Bei diesem Verfahren wird durch schichtweisen Auftrag von mindestens einem pulverförmigen Bauteilwerkstoff auf einer Bauteilplattform im Bereich einer Aufbau- und Fügezone sowie durch schichtweises und lokales Schmelzen oder Sintern des Bauteilwerkstoffs mittels im Bereich der Aufbau- und Fügezone zugeführter Energie ein entsprechendes Bauteil schichtweise hergestellt. Die Zufuhr der Energie erfolgt hierbei über wenigstens einen Hochenergiestrahl, beispielsweise durch Laserstrahlen eines CO₂-Lasers, Nd:YAG-Lasers, Yb-Faserlasers, Diodenlasers oder dergleichen und/oder durch Elektronenstrahlen. Zum Aufschmelzen bzw. Versintern des Bauteilwerkstoffs werden der wenigstens eine Hochenergiestrahl und die Bauteilplattform zumindest bereichsweise in Form einer entlang einer linearen Vorschubrichtung angeordneten Parallelenschar relativ zueinander bewegt, wodurch sich sogenannte Belichtungsstreifen aus linearen Aufschmelz- bzw. Sinterzonen in Form einer Parallelenschar ergeben.

Ein derartiges Verfahren ist auch aus der DE 10 2007 014 683 A1 bekannt, bei welchem der Laserstrahl in einer Mehrzahl paralleler Vektoren über die Pulverschicht geführt wird. In aufeinanderfolgenden Pulverschichten werden die Vektoren um einen Winkel gedreht, der verschieden von 180 °, 90 ° und 45 ° Grad ist.

Aus der EP 2 772 329 A1 ist ein Verfahren zum Herstellen eines Hybridbauteils bekannt. Das Verfahren umfasst die Schritte Herstellen eines Vorformlings als ersten Teil des Hybridbauteils, anschließend Aufbauen dieses Vorformlings einen zweiten Teil des Bauteils aus einem metallischen Pulvermaterial mittels eines additiven Fertigungsprozesses durch Abtasten mit einem Energiestrahl, wodurch eine kontrollierte Kornorientierung in der Primärrichtung und in der Sekundärrichtung festgelegt wird. Als Abtastmuster des Energiestrahls wird eine "island"-Scanstrategie verwendet.

Aufgabe der vorliegenden Erfindung ist es, ein Verfahren und eine Vorrichtung bereitzustellen, welche die generative Herstellung zumindest eines Bauteilbereichs eines Bauteils mit verbesserter Gefügestruktur ermöglichen.

Die Aufgabe wird erfindungsgemäß durch ein Verfahren mit den Merkmalen des Patentanspruchs 1 sowie durch eine Vorrichtung mit den Merkmalen des Patentanspruchs 8 gelöst. Vorteilhafte Ausgestaltungen mit zweckmäßigen Weiterbildungen der Erfindung sind in den jeweiligen Unteransprüchen angegeben, wobei vorteilhafte Ausgestaltung des erfindungsgemäßen Verfahrens als vorteilhafte Ausgestaltungen der erfindungsgemäßen Vorrichtung und umgekehrt anzusehen sind.

Ein erster Aspekt der Erfindung betrifft ein Verfahren zum generativen Herstellen zumindest eines Bauteilbereichs eines Bauteils, insbesondere eines Bauteils einer Turbine oder eines Verdichters. Dabei wird erfindungsgemäß eine verbesserte Gefügestruktur des hergestellten Bauteils bzw. Bauteilbereichs dadurch erzielt, dass der wenigstens eine Hochenergiestrahl und die Bauteilplattform bei wenigstens zwei unterschiedlichen Pulverschichten derart relativ zueinander bewegt werden, dass in Pulverschichtbereichen, die in Absenkrichtung übereinander liegen, die jeweiligen Parallelenscharen der jeweiligen Pulverschichten in unterschiedlichen Winkeln zur jeweiligen linearen Vorschubrichtung angeordnet werden. Mit anderen Worten ist es erfindungsgemäß vorgesehen, dass bei miteinander korrespondierenden Belichtungsstreifen wenigstens zweier mittelbar oder unmittelbar übereinander liegender Pulverschichten die Einzellinien, aus denen die Parallelenscharen gebildet werden, bezüglich der Vorschubrichtung relativ zueinander verdreht angeordnet bzw. erzeugt werden. Hierdurch wird auf besonders einfache und zuverlässige Weise vermieden, dass sich im hergestellten Bauteil bzw. Bauteilbereich Vorzugsrichtungen im Gefüge des Bauteilwerkstoffs ausbilden. Damit können im Vergleich zu den bekannten Herstellungsverfahren die mechanische und die thermische Widerstandsfähigkeit des Bauteils bei ansonsten gleichen Herstellungszeiten und -kosten vorteilhaft gesteigert werden. Das erfindungsgemäße Verfahren kann dabei grundsätzlich zur Herstellung eines vollständigen Bauteils oder zur Herstellung eines bestimmten Bauteilbereichs bzw. zur Reparatur oder Wiederherstellung eines Bauteilbereichs eines Bauteils verwendet werden. Der Winkel kann dabei betragsmäßig für jede Parallelenschar bzw. für jeden Belichtungsstreifen und jede Pulverschicht grundsätzlich frei zwischen etwa 1° und etwa 179° bezüglich der jeweiligen linearen Vorschubrichtung eingestellt werden und dementsprechend beispielsweise 1°, 2°, 3°, 4°, 5°, 6°, 7°, 8°, 9°, 10°, 11°, 12°, 13°, 14°, 15°, 16°, 17°, 18°, 19°, 20°, 21°, 22°, 23°, 24°, 25°, 26°, 27°, 28°, 29°, 30°, 31°, 32°, 33°, 34°, 35°, 36°, 37°, 38°, 39°, 40°, 41°, 42°, 43°, 44°, 45°, 46°, 47°, 48°, 49°, 50°, 51°, 52°, 53°, 54°, 55°, 56°, 57°, 58°, 59°, 60°, 61°, 62°, 63°, 64°, 65°, 66°, 67°, 68°, 69°, 70°, 71°, 72°, 73°, 74°, 75°, 76°, 77°, 78°, 79°, 80°, 81°, 82°, 83°, 84°, 85°, 86°, 87°, 88°, 89°, 90°, 91°, 92°, 93°, 94°, 95°, 96°, 97°, 98°, 99°, 100°, 101°, 102°, 103°, 104°, 105°, 106°, 107°, 108°, 109°, 110°, 111°, 112°, 113°, 114°, 115°, 116°, 117°, 118°, 119°, 120°, 121°, 122°, 123°, 124°, 125°, 126°, 127°, 128°, 129°, 130°, 131°, 132°, 133°, 134°, 135°, 136°, 137°, 138°, 139°, 140°, 141°, 142°, 143°, 144°, 145°, 146°, 147°, 148°, 149°, 150°, 151°, 152°, 153°, 154°, 155°, 156°, 157°, 158°, 159°, 160°, 161°, 162°, 163°, 164°, 165°, 166°, 167°, 168°, 169°, 170°, 171°, 172°, 173°, 174°, 175°, 176°, 177°, 178° oder 179° betragen.

In einer vorteilhaften Ausgestaltung der Erfindung ist vorgesehen, dass der wenigstens eine Hochenergiestrahl und die Bauteilplattform bei wenigstens zwei aufeinander folgenden Pulverschichten und/oder bei allen Pulverschichten derart relativ zueinander bewegt werden, dass in Pulverschichtbereichen, die in Absenkrichtung übereinander liegen und aneinander angrenzen, die jeweiligen Parallelenscharen der jeweiligen Pulverschichten in unterschiedlichen Winkeln zur jeweiligen linearen Vorschubrichtung angeordnet werden. Mit anderen Worten ist es erfindungsgemäß vorgesehen, zumindest für in Absenkrichtung übereinander liegende Pulverschichtbereiche nach der Herstellung einer ersten Bauteilschicht den Verlauf bzw. die relative Ausrichtung der parallelen Belichtungslinien gegenüber der linearen Vorschubrichtung zumindest bei der folgenden Bauteilschicht zu verändern. Beispielsweise kann für die Parallelenschar einer ersten Pulverschicht ein Winkel von etwa 90° zur linearen Vorschubrichtung eingestellt werden, während für die folgende Pulverschicht im korrespondierenden Pulverschichtbereich ein Winkel von etwa 45° eingestellt wird. Dementsprechend kann der Winkel bei wenigstens einer weiteren Pulverschicht oder bei allen Pulverschichten nach jedem Durchgang geändert und neu eingestellt werden. Hierdurch wird die Entstehung von Vorzugsrichtungen im Gefüge des Bauteils besonders zuverlässig verhindert. Dabei kann in Abhängigkeit der Schichtzahl grundsätzlich vorgesehen sein, dass jeder Pulverschicht ein individueller Winkel zugeordnet wird.

Weitere Vorteile ergeben sich, wenn der wenigstens eine Hochenergiestrahl und die Bauteilplattform zumindest bereichsweise in alternierenden, insbesondere streng alternierenden Linearbewegungen entlang wenigstens einer linearen Vorschubrichtung relativ zueinander bewegt werden, um eine Parallelenschar auszubilden. Mit anderen Worten ist es vorgesehen, dass die einzelnen Geraden oder Beleuchtungslinien, welche zusammen die Parallelenschar bilden, durch richtungswechselnde relative Bewegung zwischen dem Hochenergiestrahl und der Bauteilplattform erzeugt werden. Dabei kann vorgesehen sein, dass die Richtung nach jeder Linie, das heißt streng alternierend, oder nach einer vorgegebenen Anzahl an Linien, das heißt alternierend, geändert wird. Hierdurch werden eine vorteilhafte Wärmeverteilung im erzeugten Belichtungsstreifen und eine entsprechend gleichmäßige Gefügebildung erreicht.

In einer weiteren vorteilhaften Ausgestaltung der Erfindung ist vorgesehen, dass der wenigstens eine Hochenergiestrahl und die Bauteilplattform bei wenigstens zwei unterschiedlichen Pulverschichten derart relativ zueinander bewegt werden, dass die jeweiligen linearen Vorschubrichtungen in in Absenkrichtung übereinander liegenden Pulverschichtbereichen gleich ausgerichtet sind. Mit anderen Worten wird die Vorschubrichtung für einen bestimmten Pulverschichtbereich über zwei oder mehr Pulverschichten konstant gehalten. Statt den Belichtungsstreifen selbst durch Änderung der Vorschubrichtung zu drehen, werden somit lediglich die Einzellinien, aus denen sich der Belichtungsstreifen zusammensetzt, von Pulverschicht zu Pulverschicht gegeneinander verdreht. Hierdurch können die einzelnen Bauteilschichten auf einfache und schnelle Weise hergestellt werden, ohne dass es zu Vorzugsrichtungen im Materialgefüge des Bauteils kommt.

Weitere Vorteile ergeben sich, indem das Bauteil zumindest bereichsweise und/oder zumindest zeitweise mittels wenigstens einer Induktionsspule induktiv erwärmt wird. Dies erlaubt es, das Bauteil bzw. den Bauteilbereich gezielt und materialabhängig zu erwärmen, um das Verschmelzen bzw. Versintern zu erleichtern, die Ausbildung gewünschter Gefügestrukturen zu befördern und das Auftreten von Heißrissbildung zu vermeiden. Beispielsweise kann das Bauteil bzw. der Bauteilbereich auf eine Basistemperatur erwärmt werden, die ca. 300°C bis 400°C unterhalb einer bevorzugten Schmelztemperatur der jeweiligen Legierung bzw. des Pulvers liegt.

Dabei hat es sich weiterhin als vorteilhaft gezeigt, wenn der Winkel wenigstens einer Parallelenschar zur zugeordneten linearen Vorschubrichtung in Abhängigkeit einer Erwärmungscharakteristik der wenigstens einen Induktionsspule gewählt wird. Mit anderen Worten wird die Belichtung einer, mehrerer oder aller Pulverschichten an die Erwärmungscharakteristik der wenigstens einen Induktionsspule angepasst. Dies erlaubt eine besonders präzise Einflussnahme auf das entstehende Bauteilgefüge.

In einer weiteren vorteilhaften Ausgestaltung der Erfindung ist vorgesehen, dass der wenigstens eine Hochenergiestrahl und die Bauteilplattform bei wenigstens einer Pulverschicht derart relativ zueinander bewegt werden, dass zumindest zwei Geraden der betreffenden Parallelenschar gleiche und/oder unterschiedliche Längen aufweisen. Dies erlaubt in Abhängigkeit des jeweils gewählten Winkels eine präzise Einstellung der Geometrie des durch die Parallelenschar definierten Belichtungsstreifens.

Ein zweiter Aspekt der Erfindung betrifft eine Vorrichtung zur generativen Herstellung zumindest eines Bauteilbereichs eines Bauteils, insbesondere eines Bauteils einer Turbine oder eines Verdichters. Die Vorrichtung umfasst hierzu mindestens eine Pulverzuführung zum Auftrag von mindestens einer Pulverschicht auf eine Aufbau- und Fügezone einer absenkbaren Bauteilplattform, mindestens eine Strahlungsquelle zum Erzeugen wenigstens eines Hochenergiestrahls, mittels welchem die Pulverschicht im Bereich der Aufbau- und Fügezone lokal verschmelzbar und/oder versinterbar ist, und eine Bewegungseinrichtung, mittels welcher der wenigstens eine Hochenergiestrahl und die Bauteilplattform zumindest bereichsweise in Form einer entlang einer linearen Vorschubrichtung angeordneten Parallelenschar relativ zueinander bewegbar sind, wodurch sich Belichtungsstreifen aus linearen Aufschmelz- bzw. Sinterzonen in Form der Parallelenschar ergeben. Dabei wird die generative Herstellung zumindest eines Bauteilbereichs eines Bauteils mit verbesserter Gefügestruktur erfindungsgemäß dadurch ermöglicht, dass die Bewegungseinrichtung ausgebildet ist, den wenigstens einen Hochenergiestrahl und die Bauteilplattform bei wenigstens zwei unterschiedlichen Pulverschichten derart relativ zueinander zu bewegen, dass in Pulverschichtbereichen, die in Absenkrichtung der Bauteilplattform übereinander liegen, die jeweiligen Parallelenscharen der betreffenden Pulverschichten in unterschiedlichen Winkeln zur jeweiligen linearen Vorschubrichtung angeordnet sind. Weitere sich hieraus ergebenden Merkmale und deren Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

In einer vorteilhaften Ausgestaltung der Erfindung ist wenigstens eine Induktionsspule vorgesehen, mittels welcher das Bauteil zumindest bereichsweise und/oder zumindest zeitweise induktiv erwärmbar ist. Dies erlaubt es, das Bauteil bzw. den Bauteilbereich gezielt und materialabhängig zu erwärmen, um das Verschmelzen bzw. Vers intern zu erleichtern, die Ausbildung gewünschter Gefügestrukturen zu befördern und das Auftreten von Heißrissbildung zu vermeiden. Beispielsweise kann das Bauteil bzw. der Bauteilbereich auf eine Basistemperatur erwärmt werden, die ca. 300°C bis 400°C unterhalb einer bevorzugten Schmelztemperatur der jeweiligen Legierung bzw. des Pulvers liegt. Die wenigstens eine Induktionsspule kann hierzu mit Wechselstrom beaufschlagt werden, wodurch ein Magnetfeld entsteht, das in dem Bauteil Wirbelströme hervorruft, die in Joulesche Wärme umgesetzt wird. Die wenigstens eine Induktionsspule selbst kann gekühlt, beispielsweise flüssigkeitsgekühlt sein. Weiterhin kann vorgesehen sein, dass zwei oder mehr Induktionsspulen vorgesehen sind, beispielsweise um größere oder geometrisch komplexe Bauteile oder Bauteilbereiche gezielt erwärmen zu können. Zusätzlich kann die Leistung der Induktionsspule(n) in geeigneter Weise steuerbar und/oder regelbar sein, indem beispielsweise die Frequenz, mit der die Induktionsspule(n) betreibbar ist bzw. sind, angepasst werden kann. Damit ist eine sehr exakte und definierte Temperatureinstellung für das generativ herzustellende Bauteil möglich. Neben der Vermeidung von Vorzugsrichtungen im Materialgefüge können hierdurch auch Rissbildungen vermieden werden, insbesondere, wenn das Bauteil bzw. der Bauteilbereich aus Materialien hergestellt werden soll, die für Rissbildung anfällig sind. Unter einer Induktionsspule wird im Rahmen der vorliegenden Erfindung jede Vorrichtung verstanden, die eine induktive Erwärmung erzeugen kann, also beispielsweise unabhängig von der Anzahl der Windungen, so dass die Induktionsspule beispielsweise auch als Induktionsschleife bezeichnet werden kann.

In einer weiteren vorteilhaften Ausgestaltung der Erfindung ist vorgesehen, dass die wenigstens eine Induktionsspule verdrehsicher bezüglich der Bauteilplattform angeordnet ist. Nachdem die Ausbildung von Vorzugsrichtungen im Gefüge des generativ hergestellten Bauteils bzw. Bauteilbereichs mit Hilfe der erfindungsgemäßen Vorrichtung vorteilhaft unterbunden werden kann, kann vorteilhaft auf verdrehbare Induktionsspulen und dergleichen verzichtet werden. Hierdurch kann die Vorrichtung entsprechend kostengünstiger ausgebildet sein. Es kann grundsätzlich sogar vorgesehen sein, dass die Induktionsspule(n) ortsfest gegenüber der Bauteilplattform und/oder einem Gehäuse der Vorrichtung, das heißt weder verdrehbar noch translatorisch oder anderweitig bewegbar angeordnet ist bzw. sind.

Eine besonders zuverlässige Vermeidung von Vorzugsrichtungen im Materialgefüge des Bauteils wird in weiterer Ausgestaltung dadurch ermöglicht, dass die Bewegungseinrichtung dazu ausgebildet ist, den Winkel wenigstens einer Parallelenschar zur zugeordneten linearen Vorschubrichtung in Abhängigkeit einer Erwärmungscharakteristik der wenigstens einen Induktionsspule einzustellen.

Erfindungsgemäß ist eine Steuer- und/oder Regeleinrichtung vorgesehen. In einer weiteren vorteilhaften Ausgestaltung der Erfindung ist die Steuer- und/oder Regeleinrichtung ausgebildet, die Bewegungseinrichtung und/oder die Strahlungsquelle in Abhängigkeit einer Schichtinformation des herzustellenden Bauteilbereichs und/oder in Abhängigkeit einer Werkstoffinformation der Pulverschicht zu betreiben. Dies erlaubt eine besonders präzise Herstellung des Bauteils bzw. Bauteilbereichs. Zusätzlich kann die Steuer- und/oder Regeleinrichtung auch ausgebildet, etwaig vorhandene Induktionsspule(n) zu steuern bzw. zu regeln. Eine Regelung kann insbesondere in Abhängigkeit der Messergebnisse einer grundsätzlich optionalen Temperaturerfassungseinrichtung erfolgen. Erfindungsgemäß wird zudem ein Computerprogramm mit einem Softwarecode bereitgestellt, der so angepasst ist, dass er bei Ausführen durch mindestens eine Prozessoreinrichtung der Steuer- und/oder Regeleinrichtung ein Verfahren mit den Verfahrensschritten nach einem der Ansprüche 1 bis 7 durchführt. Ein solches Computerprogramm kann auf einem greifbaren Speichermedium bereitgestellt sein.

Ein Bauteil für eine Turbine oder einen Verdichter kann durch ein Verfahren gemäß dem ersten Erfindungsaspekt erhältlich oder erhalten sein und/oder mittels einer Vorrichtung gemäß dem zweiten Erfindungsaspekt hergestellt sein. Das Bauteil weist somit eine Gefügestruktur auf, die zumindest im Wesentlichen frei von Vorzugsrichtungen ausgebildet ist. Weitere sich hieraus ergebenden Merkmale und deren

Vorteile sind den Beschreibungen des ersten und des zweiten Erfindungsaspekts zu entnehmen. Das Bauteil kann insbesondere als Bauteil für ein Flugzeugtriebwerk ausgebildet sein.

Weitere Merkmale der Erfindung ergeben sich aus den Ansprüchen, dem Ausführungsbeispielen sowie anhand der Zeichnungen. Die vorstehend in der Beschreibung genannten Merkmale und Merkmalskombinationen sowie die nachfolgend in dem Ausführungsbeispiel genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:
- Fig. 1: eine Prinzipdarstellung von drei aufeinander folgenden Pulverschichten, die im Rahmen eines aus dem Stand der Technik bekannten Verfahrens zum generativen Herstellen zumindest eines Bauteils in einer Aufbau- und Fügezone nacheinander mit einem Hochenergiestrahl beaufschlagt werden; und
- Fig. 2: eine Prinzipdarstellung von drei aufeinander folgenden Pulverschichten, die im Rahmen eines erfindungsgemäßen Verfahrens zum generativen Herstellen eines Bauteils in einer Aufbau- und Fügezone nacheinander mit einem Hochenergiestrahl beaufschlagt werden.

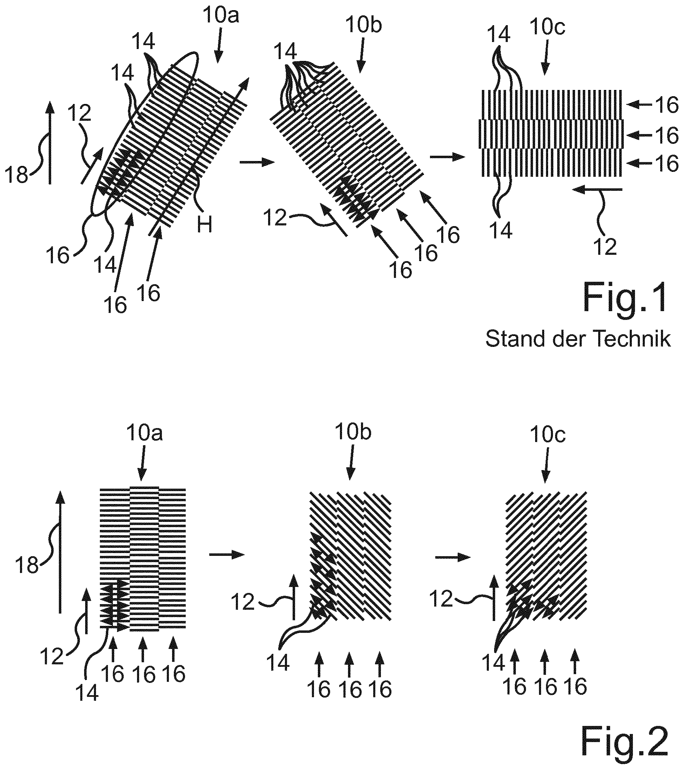

Fig. 1 zeigt eine Prinzipdarstellung von drei aufeinander folgenden Pulverschichten 10a-c, die im Rahmen eines aus dem Stand der Technik bekannten Verfahrens zum generativen Herstellen zumindest eines Bauteils einer Turbine oder eines Verdichters in einer Aufbau-und Fügezone I einer Bauteilplattform einer entsprechenden Vorrichtung nacheinander mit wenigstens einem Hochenergiestrahl, beispielsweise einem Laser- und/oder Elektronenstrahl beaufschlagt werden. Üblicherweise wird hierzu der Hochenergiestrahl über die bezüglich der Vorrichtung ortsfeste Pulverschicht 10a-c gesteuert, um die betreffende Pulverschicht 10a-c in Abhängigkeit einer Schichtinformation des herzustellenden Bauteilbereichs lokal zu verschmelzen und/oder zu versintern. Grundsätzlich besteht jedoch im Rahmen des erfindungsgemäßen Verfahrens auch die Möglichkeit, dass der Hochenergiestrahl mittels einer Strahlungsquelle ortsfest bezüglich der Vorrichtung erzeugt und die Bauteilplattform mit der darauf aufgebrachten Pulverschicht 10a-c relativ zur Strahlungsquelle bewegt wird. Ebenso kann vorgesehen sein, dass sowohl der Hochenergiestrahl als auch die Bauteilplattform relativ zueinander bewegt werden.

Zum Verschmelzen und/oder Versintern der einzelnen Pulverschichten 10a-c wird der Hochenergiestrahl im gezeigten Beispiel zumindest bereichsweise in Form von parallel entlang einer linearen Vorschubrichtung 12 angeordneten Geraden 14 bewegt, wodurch sich Parallelenscharen 16 ergeben, die auch als Belichtungsstreifen bezeichnet werden können. Exemplarisch in Anzahl, Orientierung und Geometrie sind für jede Pulverschicht 10a-c drei nebeneinander angeordnete Parallelenscharen 16 bzw. Belichtungsstreifen dargestellt, deren Haupterstreckungsachsen H jeweils parallel zur Vorschubrichtung 12 angeordnet sind. Man erkennt, dass alle Geraden 14 der Parallelenscharen 16 jeweils die gleiche Länge aufweisen und rechtwinklig bezüglich des Vektors der Vorschubrichtung 12 angeordnet sind. Wie weiterhin mit Pfeilen angedeutet ist, werden die einzelnen Geraden 14 durch eine streng alternierende bzw. richtungswechselnde Bewegung des Hochenergiestrahls erzeugt. Wie man in Fig. 1 weiterhin erkennt, wird üblicherweise für aufeinander folgende Pulverschichten 10a-c der Vektor der Vorschubrichtung 12 jeweils gegenüber einer ortsfesten Hauptachse 18 der Vorrichtung verdreht, wohingegen der rechte Winkel der Geraden 14 bezüglich der jeweiligen Vorschubrichtung 12 konstant gehalten wird.

Im Unterschied hierzu ist in Fig. 2 eine Prinzipdarstellung von drei aufeinander folgenden Pulverschichten 10a-c gezeigt, die im Rahmen eines erfindungsgemäßen Verfahrens zum generativen Herstellen eines Bauteils in einer Aufbau- und Fügezone nacheinander mit wenigstens einem Hochenergiestrahl beaufschlagt werden. Man erkennt, dass im Unterschied zum in Fig. 1 gezeigten Verfahren der wenigstens eine Hochenergiestrahl derart über die einzelnen Pulverschichten 10a-c bewegt wird, dass in den drei gezeigten Pulverschichtbereichen, die in Absenkrichtung der Bauteilplattform übereinander liegen, die Geraden der jeweiligen Parallelenscharen 16 bzw. Belichtungsstreifen in jeweils unterschiedlichen Winkeln zur jeweiligen linearen Vorschubrichtung 12 angeordnet werden. Die Vorschubrichtungen 12 werden demgegenüber im gezeigten Ausführungsbeispiel konstant gehalten und verlaufen bei allen Pulverschichten 10a-c parallel zur Hauptachse 18 der zur Durchführung des Verfahrens verwendeten Vorrichtung, wodurch das Verfahren besonders schnell und einfach durchgeführt werden kann. Grundsätzlich können aber auch innerhalb einer Pulverschicht 10a-c bzw. bei jeder neuen Pulverschicht 10a-c veränderte Winkel zwischen der Vorschubrichtungen 12 und der Hauptachse 18 eingestellt werden. Anstatt, wie in Fig. 1 gezeigt, die Vorschubrichtungen 12 der Parallelenscharen 16, das heißt den Belichtungsstreifen bei jeder Pulverschicht 10a-c zu verdrehen, werden somit lediglich die Einzellinien 14, aus denen die einzelnen Belichtungsstreifen 16 bestehen, mit jeder neuen Pulverschicht 10a-c gegeneinander verdreht, wodurch das Entstehen von Vorzugsrichtungen im Materialgefüge zuverlässig verhindert wird. Dabei kann vorgesehen sein, dass jeder Pulverschicht 10a-c ein bestimmter Winkel zugeordnet ist, so dass ein bestimmter Winkel jeweils nur einmal innerhalb des generativ hergestellten Bauteils bzw. Bauteilbereichs verwendet wird. Wie man in Fig. 2 weiterhin erkennt, sind die Geraden 14 der drei gezeigten Parallelenscharen 16 in jeder einzelnen Pulverschicht 10a-c gleich ausgerichtet. Es kann jedoch grundsätzlich auch vorgesehen sein, dass innerhalb einer einzelnen Pulverschicht 10a, 10b und/oder 10c die Winkel zwischen den Geraden 14 von benachbarten oder voneinander beabstandeten Parallelenscharen 16 unterschiedlich eingestellt werden, um auch die Ausbildung von Vorzugsrichtungen innerhalb einer Pulverschicht 10a-c besonders zuverlässig zu verhindern.

Weiterhin kann es grundsätzlich vorgesehen sein, dass die zur Durchführung des Verfahrens verwendete Vorrichtung eine oder mehrere Induktionsspulen zum induktiven Erwärmen des Bauteils bzw. der Pulverschichten 10a-c aufweist. Nachdem die Entstehung von Vorzugsrichtungen im Gefüge des Bauteilwerkstoffs mit Hilfe des erfindungsgemäßen Verfahrens bzw. der zur Durchführung des Verfahrens verwendeten erfindungsgemäßen Vorrichtung zuverlässig verhindert wird, müssen sich die etwaig vorhandenen Induktionsspulen nicht verdrehen oder anderweitig bewegen lassen, wodurch die Vorrichtung entsprechend einfacher und kostengünstiger ausgebildet und betrieben werden kann.

## Patentansprüche

1. Verfahren zum generativen Herstellen zumindest eines Bauteilbereichs eines Bauteils, insbesondere eines Bauteils einer Turbine oder eines Verdichters, bei welchem zumindest folgende Schritte durchgeführt werden:
a) Auftragen einer Pulverschicht (10a-c) auf eine Bauteilplattform im Bereich einer Aufbau- und Fügezone;
b) Lokales Verschmelzen und/oder Versintern der Pulverschicht (10a-c), indem wenigstens ein Hochenergiestrahl im Bereich der Aufbau- und Fügezone relativ zur Bauteilplattform bewegt wird und die Pulverschicht (10a-c) selektiv beaufschlagt, wobei der wenigstens eine Hochenergiestrahl und die Bauteilplattform zumindest bereichsweise in Form einer entlang einer linearen Vorschubrichtung (12) angeordneten Parallelenschar (16) relativ zueinander bewegt werden, wodurch sich Belichtungsstreifen aus linearen Aufschmelz- und/oder Sinterzonen in Form der Parallelenschar (16) ergeben;
c) Absenken der Bauteilplattform um eine vorbestimmte Schichtdicke in einer Absenkrichtung; und
d) Wiederholen der Schritte a) bis c) bis zur Fertigstellung des Bauteilbereichs,
**dadurch gekennzeichnet, dass**
der wenigstens eine Hochenergiestrahl und die Bauteilplattform bei wenigstens zwei unterschiedlichen Pulverschichten (10a-c) derart relativ zueinander bewegt werden, dass in Pulverschichtbereichen, die in Absenkrichtung übereinander liegen, die jeweiligen Parallelenscharen (16) der jeweiligen Pulverschichten (10a-c) in unterschiedlichen Winkeln zur jeweiligen linearen Vorschubrichtung (12) angeordnet werden.

2. Verfahren nach Anspruch 1,
**dadurch gekennzeichnet, dass**
der wenigstens eine Hochenergiestrahl und die Bauteilplattform bei wenigstens zwei aufeinander folgenden Pulverschichten (10a-c) und/oder bei allen Pulverschichten (10a-c) derart relativ zueinander bewegt werden, dass in Pulverschichtbereichen, die in Absenkrichtung übereinander liegen und aneinander angrenzen, die jeweiligen Parallelenscharen (16) der jeweiligen Pulverschichten (10a-c) in unterschiedlichen Winkeln zur jeweiligen linearen Vorschubrichtung (12) angeordnet werden.

3. Verfahren nach Anspruch 1 oder 2,
**dadurch gekennzeichnet, dass**
der wenigstens eine Hochenergiestrahl und die Bauteilplattform zumindest bereichsweise in alternierenden, insbesondere streng alternierenden Linearbewegungen entlang wenigstens einer linearen Vorschubrichtung (12) relativ zueinander bewegt werden, um eine Parallelenschar (16) auszubilden.

4. Verfahren nach einem der Ansprüche 1 bis 3,
**dadurch gekennzeichnet, dass**
der wenigstens eine Hochenergiestrahl und die Bauteilplattform bei wenigstens zwei unterschiedlichen Pulverschichten (10a-c) derart relativ zueinander bewegt werden, dass die jeweiligen linearen Vorschubrichtungen (12) in Absenkrichtung übereinander liegenden Pulverschichtbereichen gleich ausgerichtet sind.

5. Verfahren nach einem der Ansprüche 1 bis 4,
**dadurch gekennzeichnet, dass**
das Bauteil zumindest bereichsweise und/oder zumindest zeitweise mittels wenigstens einer Induktionsspule induktiv erwärmt wird.

6. Verfahren nach Anspruch 5,
**dadurch gekennzeichnet, dass**
der Winkel wenigstens einer Parallelenschar (16) zur zugeordneten linearen Vorschubrichtung (12) in Abhängigkeit einer Erwärmungscharakteristik der wenigstens einen Induktionsspule gewählt wird.

7. Verfahren nach einem der Ansprüche 1 bis 6,
**dadurch gekennzeichnet, dass**
der wenigstens eine Hochenergiestrahl und die Bauteilplattform bei wenigstens einer Pulverschicht (10a-c) derart relativ zueinander bewegt werden, dass zumindest zwei Geraden (14) der betreffenden Parallelenschar (10a-c) gleiche und/oder unterschiedliche Längen aufweisen.

8. Vorrichtung zur generativen Herstellung zumindest eines Bauteilbereichs eines Bauteils, insbesondere eines Bauteils einer Turbine oder eines Verdichters, umfassend:
- mindestens eine Pulverzuführung zum Auftrag von mindestens einer Pulverschicht (10a-c) auf eine Aufbau- und Fügezone einer absenkbaren Bauteilplattform;
- mindestens eine Strahlungsquelle zum Erzeugen wenigstens eines Hochenergiestrahls, mittels welchem die Pulverschicht (10a-c) im Bereich der Aufbau- und Fügezone lokal verschmelzbar und/oder versinterbar ist; und
- eine Bewegungseinrichtung, mittels welcher der wenigstens eine Hochenergiestrahl und die Bauteilplattform zumindest bereichsweise in Form einer entlang einer linearen Vorschubrichtung (12) angeordneten Parallelenschar (16) relativ zueinander bewegbar sind, wodurch sich Belichtungsstreifen aus linearen Aufschmelz- bzw. Sinterzonen in Form der Parallelenschar (16) ergeben,
- eine Steuer- und/oder Regeleinrichtung mit mindestens einer Prozessoreinrichtung, aufweisend ein Computerprogramm mit einem Softwarecode, der so angepasst ist, dass er bei Ausführen durch die mindestens eine Prozessoreinrichtung der Steuer- und/oder Regeleinrichtung ein Verfahren mit den Verfahrensschritten nach einem der Ansprüche 1 bis 7 durchführt,
**dadurch gekennzeichnet, dass**
die Bewegungseinrichtung ausgebildet ist, den wenigstens einen Hochenergiestrahl und die Bauteilplattform bei wenigstens zwei unterschiedlichen Pulverschichten (10a-c) derart relativ zueinander zu bewegen, dass in Pulverschichtbereichen, die in Absenkrichtung der Bauteilplattform übereinander liegen, die jeweiligen Parallelenscharen (16) der betreffenden Pulverschichten (10a-c) in unterschiedlichen Winkeln zur jeweiligen linearen Vorschubrichtung (12) angeordnet sind.

9. Vorrichtung nach Anspruch 8,
**dadurch gekennzeichnet, dass**
wenigstens eine Induktionsspule vorgesehen ist, mittels welcher das Bauteil zumindest bereichsweise und/oder zumindest zeitweise induktiv erwärmbar ist.

10. Vorrichtung nach Anspruch 9,
**dadurch gekennzeichnet, dass**
die wenigstens eine Induktionsspule verdrehsicher bezüglich der Bauteilplattform angeordnet ist.

11. Vorrichtung nach Anspruch 9 oder 10,
**dadurch gekennzeichnet, dass**
die Bewegungseinrichtung dazu ausgebildet ist, den Winkel wenigstens einer Parallelenschar (16) zur zugeordneten linearen Vorschubrichtung (12) in Abhängigkeit einer Erwärmungscharakteristik der wenigstens einen Induktionsspule einzustellen.

12. Vorrichtung nach einem der Ansprüche 8 bis 11,
**dadurch gekennzeichnet, dass**
die Steuer- und/oder Regeleinrichtung ausgebildet ist, die Bewegungseinrichtung und/oder die Strahlungsquelle in Abhängigkeit einer Schichtinformation des herzustellenden Bauteilbereichs und/oder in Abhängigkeit einer Werkstoffinformation der Pulverschicht zu betreiben.

## Claims

1. A method for generatively producing at least one component area of a component, in particular of a component of a turbine or of a compressor, in which at least the following steps are performed:
a) applying a powder layer (10a-c) onto a component platform in the area of a construction and joining zone;
b) locally melting and/or sintering the powder layer (10a-c) in that at least one high-energy beam is moved in relation to the component platform in the area of the construction and joining zone and selectively impinges on the powder layer (10a-c), wherein the at least one high-energy beam and the component platform are moved in relation to each other at least in certain areas in the form of a family of parallels (16) arranged along a linear feed direction (12), whereby exposure strips of linear melting and/or sintering zones in the form of the family of parallels (16) arise;
c) lowering the component platform by a predetermined layer thickness in a lowering direction; and
d) repeating the steps a) to c) until completion of the component area,
**characterized in that**
the at least one high-energy beam and the component platform are moved in relation to each other upon at least two different powder layers (10a-c) such that the respective families of parallels (16) of the respective powder layers (10a-c) are arranged at different angles to the respective linear feed direction (12) in powder layer areas, which are one above the other in lowering direction.

2. The method according to claim 1,
**characterized in that**
The at least one high-energy beam and the component platform are moved in relation to each other upon at least two consecutive powder layers (10a-c) and/or upon all powder layers (10a-c) such that the respective families of parallels (16) of the respective powder layers (10a-c) are arranged at different angles to the respective linear feed direction (12) in powder layer areas, which are one above the other in lowering direction and adjoin to each other.

3. The method according to claim 1 or 2,
**characterized in that**
the at least one high-energy beam and the component platform are moved in relation to each other at least in certain areas in alternating, in particular strictly alternating linear movements along at least one linear feed direction (12) to form a family of parallels (16).

4. The method according to any one of claims 1 to 3,
**characterized in that**
the at least one high-energy beam and the component platform are moved in relation to each other upon at least two different powder layers (10a-c) such that the respective linear feed directions (12) of powder layer areas situated one above the other in lowering direction are identically oriented.

5. The method according to any one of claims 1 to 4,
**characterized in that**
the component is inductively heated by means of at least one induction coil at least in certain areas and/or at least for a time.

6. The method according to claim 5,
**characterized in that**
the angle of at least one family of parallels (16) to the associated linear feed direction (12) is selected depending on a heating characteristic of the at least one induction coil.

7. The method according to any one of claims 1 to 6,
**characterized in that**
the at least one high-energy beam and the component platform are moved in relation to each other upon at least one powder layer (10a-c) such that at least two straight lines (14) of the concerned family of parallels (10a-c) have identical and/or different lengths.

8. A device for generatively producing at least one component area of a component, in particular of a component of a turbine or of a compressor, comprising:
- at least one powder supply for applying at least one powder layer (10a-c) onto a construction and joining zone of a lowerable component platform;
- at least one radiation source for generating at least one high-energy beam, by means of which the powder layer (10a-c) can be locally melted and/or sintered in the area of the construction and joining zone; and
- a movement device, by means of which the at least one high-energy beam and the component platform are movable in relation to each other at least in certain areas in the form of a family of parallels (16) arranged along a linear feed direction (12), whereby exposure strips of linear melting or sintering zones in the form of the family of parallels (16) arise,
- a control and/or regulation device with at least one processor device, comprising a computer program with a software code, which is adapted such that, upon execution by the at least one processor device of the control and/or regulation device, it performs a method with the method steps according to any one of claims 1 to 7,
**characterized in that**
the movement device is formed to move the at least one high-energy beam and the component platform in relation to each other upon at least two different powder layers (10a-c) such that the respective families of parallels (16) of the concerned powder layers (10a-c) are arranged at different angles to the respective linear feed direction (12) in powder layer areas, which are one above the other in lowering direction of the component platform.

9. The device according to claim 8,
**characterized in that**
at least one induction coil is provided, by means of which the component can be inductively heated at least in certain areas and/or at least for a time.

10. The device according to claim 9,
**characterized in that**
the at least one induction coil is non-rotatably arranged with respect to the component platform.

11. The device according to claim 9 or 10,
**characterized in that**
the movement device is formed to adjust the angle of at least one family of parallels (16) to the associated linear feed direction (12) depending on a heating characteristic of the at least one induction coil.

12. The device according to any one of claims 8 to 11,
**characterized in that**
the control and/or regulation device is formed to operate the movement device and/or the radiation source depending on layer information of the component area to be produced and/or depending on material information of the powder layer.

## Revendications

1. Procédé de fabrication additive d'au moins une zone de composant d'un composant, en particulier d'un composant d'une turbine ou d'un compresseur, dans lequel les étapes suivantes sont au moins mises en oeuvre :
a) appliquer une couche de poudre (10a-c) sur une plate-forme de composant dans la zone d'une région de construction et d'assemblage ;
b) faire fondre et/ou fritter localement la couche de poudre (10a-c) en déplaçant au moins un faisceau à haute énergie dans la zone de la région de construction et d'assemblage par rapport à la plate-forme de composant et appliquer sélectivement la couche de poudre (10a-c), le au moins un faisceau à haute énergie et la plate-forme de composant étant déplacés l'un par rapport à l'autre au moins dans certaines zones sous la forme d'un agencement parallèle (16) disposé le long d'une direction d'avance linéaire (12), en sorte que des régions linéaires de fusion et/ou de frittage engendrent des bandes d'exposition ayant la forme de l'agencement parallèle (16) ;
c) abaisser la plate-forme de composant d'une épaisseur de couche prédéterminée dans une direction d'abaissement ; et
d) répéter les étapes a) à c) jusqu'à l'achèvement de la zone de composant,
**caractérisé en ce que**
le au moins un faisceau à haute énergie et la plate-forme de composant sont déplacés l'un par rapport à l'autre dans au moins deux couches de poudre différentes (10a-c) de telle sorte que, dans des régions de couches de poudre superposées dans la direction d'abaissement, les agencements parallèles (16) respectifs des couches de poudre (10a-c) respectives sont disposés à différents angles par rapport à la direction d'avance linéaire (12) respective.

2. Procédé selon la revendication 1,
**caractérisé en ce que**
le au moins un faisceau à haute énergie et la plate-forme de composant sont déplacés l'un par rapport à l'autre dans au moins deux couches de poudre successives (10a-c) et/ou dans toutes les couches de poudre (10a-c), de telle sorte que, dans des régions de couches de poudre superposées dans la direction d'abaissement et contiguës, les agencements parallèles (16) respectifs des couches de poudre (10a-c) respectives sont disposés à différents angles par rapport à la direction d'avance linéaire (12) respective.

3. Procédé selon la revendication 1 ou 2,
**caractérisé en ce que**
le au moins un faisceau à haute énergie et la plate-forme de composant sont déplacés l'un par rapport à l'autre au moins dans certaines zones par des mouvements linéaires alternatifs, en particulier strictement alternatifs, le long d'au moins une direction d'avance linéaire (12), de manière à former un agencement parallèle (16).

4. Procédé selon l'une des revendications 1 à 3,
**caractérisé en ce que**
le au moins un faisceau à haute énergie et la plate-forme de composant sont déplacés l'un par rapport à l'autre dans au moins deux couches de poudre différentes (10a-c), telle sorte que les directions d'avance linéaires (12) respectives sont orientées de façon identique dans les régions de couches de poudre superposées dans la direction d'abaissement.

5. Procédé selon l'une des revendications 1 à 4,
**caractérisé en ce que**
le composant est chauffé par induction au moins dans certaines zones et/ou au moins temporairement au moyen d'au moins une bobine d'induction.

6. Procédé selon la revendication 5,
**caractérisé en ce que**
l'angle d'au moins un agencement parallèle (16) par rapport à la direction d'avance linéaire (12) associée est choisi en fonction d'une caractéristique de chauffage de la au moins une bobine d'induction.

7. Procédé selon l'une des revendications 1 à 6,
**caractérisé en ce que**
le au moins un faisceau à haute énergie et la plate-forme de composant sont déplacés l'un par rapport à l'autre dans au moins une couche de poudre (10a-c) de telle sorte qu'au moins deux droites (14) de l'agencement parallèle (10a-c) concerné ont des longueurs identiques et/ou différentes.

8. Dispositif pour la fabrication additive d'au moins une zone de composant d'un composant, en particulier d'un composant d'une turbine ou d'un compresseur, comprenant :
- au moins une alimentation en poudre pour appliquer au moins une couche de poudre (10a-c) sur une région de construction et d'assemblage d'une plate-forme de composant pouvant être abaissée ;
- au moins une source de rayonnement pour générer au moins un faisceau à haute énergie, au moyen duquel la couche de poudre (10a-c) peut être fondue et/ou frittée localement dans la zone de la région de construction et d'assemblage ; et
- un dispositif de déplacement au moyen duquel le au moins un faisceau à haute énergie et la plate-forme de composant peuvent être déplacés l'un par rapport à l'autre, au moins dans certaines zones, sous la forme d'un agencement parallèle (16) disposé le long d'une direction d'avance linéaire (12), en sorte que des régions linéaires de fusion et/ou de frittage engendrent des bandes d'exposition ayant la forme de l'agencement parallèle (16),
- un dispositif de commande et/ou de régulation ayant au moins un dispositif à processeur, comportant un programme informatique avec un code logiciel qui est adapté de telle sorte qu'il met en oeuvre un procédé comportant les étapes de procédé selon l'une des revendications 1 à 7 lorsqu'il est exécuté par le au moins un dispositif à processeur du dispositif de commande et/ou de régulation,
**caractérisé en ce que**
le dispositif de déplacement est configuré pour déplacer le au moins un faisceau à haute énergie et la plate-forme de composant l'un par rapport à l'autre dans au moins deux différentes couches de poudre (10a-c), de telle sorte que dans des régions de couches de poudre superposées dans la direction d'abaissement de la plate-forme de composant, les agencements parallèles (16) respectifs des couches de poudre (10a-c) concernées sont disposés à différents angles par rapport à la direction d'avance linéaire (12) respective.

9. Dispositif selon la revendication 8,
**caractérisé en ce que**
au moins une bobine d'induction est prévue, au moyen de laquelle le composant peut être chauffé par induction au moins dans certaines zones et/ou au moins temporairement.

10. Dispositif selon la revendication 9,
**caractérisé en ce que**
la au moins une bobine d'induction est agencée de manière bloquée en rotation par rapport à la plate-forme de composant.

11. Dispositif selon la revendication 9 ou 10,
**caractérisé en ce que**
le dispositif de déplacement est configuré pour régler l'angle d'au moins un agencement parallèle (16) par rapport à la direction d'avance linéaire (12) associée, en fonction d'une caractéristique de chauffage de la au moins une bobine d'induction.

12. Dispositif selon l'une des revendications 8 à 11,
**caractérisé en ce que**
le dispositif de commande et/ou de régulation est configuré pour faire fonctionner le dispositif de déplacement et/ou la source de rayonnement en fonction d'une information de couche de la zone de composant à fabriquer et/ou en fonction d'une information de matériau de la couche de poudre.
